# EUROPEAN PATENT SPECIFICATION

(11) **EP 2 863 033 B1**
(45) Date of publication and mention of the grant of the patent: **04.12.2019**
(21) Application number: 14188722.4
(22) Date of filing: 14.10.2014
(51) Int. Cl.: F02C 6/18, F02C 7/18

(54) **GAS TURBINE WITH FLEXIBLE AIR COOLING SYSTEM AND METHOD FOR OPERATING A GAS TURBINE**
GASTURBINE MIT FLEXIBLEM LUFTKÜHLSYSTEM UND VERFAHREN ZUM BETREIBEN EINER GASTURBINE
TURBINE À GAZ AVEC SYSTÈME DE REFROIDISSEMENT D'AIR FLEXIBLE ET PROCÉDÉ POUR FAIRE FONCTIONNER UNE TURBINE À GAZ

(30) Priority: 21.10.2013 EP 13189549
(43) Date of publication of application: 22.04.2015
(73) Proprietor: Ansaldo Energia IP UK Limited, London W1G 9DQ (GB)
(72) Inventor: Rofka, Stefan, 5415 Nussbaumen (CH); Marmilic, Robert, 5415 Rieden (CH); Knoepfel, Hanspeter, 5605 Dottikon (CH)
(74) Representative: Bernotti, Andrea

(56) References cited:
- EP-A1- 0 773 349
- WO-A2-2012/017247
- DE-A1- 10 041 413
- US-A1- 2009 064 656

## Description

### Technical field

The present disclosure relates to a gas turbine for in particular a gas and steam turbine plant having a cooling air cooling system, as well as to a method for operating such a gas turbine.

### Background of the disclosure

Heavy duty gas turbines used in such combined cycle power plants are conventionally provided with a cooling system for cooling down the cooling air, which is required to cool in particular the turbine(s) or combustor(s) in which said cooling air is taken from compressor extractions or from the compressor discharge of the gas turbine. For this purpose, the so-called heavy duty gas turbines are conventionally equipped with a water-based cooling system having a water/steam-cooled cooling air cooler, in which the water from a water/steam cycle of the power plant is used when the gas turbine is in operation. These cooling air coolers using water of a water/steam cycle are commonly integrated within the gas turbine, so that a specific construction for operating the gas turbine in a combined cycle operation modus is required. Once the water/steam cycle is built up and connected with the gas turbine and the cooling system of the gas turbine, an operation of the gas turbine is possible. However, in case that the water/steam cycle is not yet finalized or in case that a maintenance of this system is necessary, the gas turbines having such a cooling system using water from a water/steam cycle may not be operated, since the cooling system for cooling air is not functioning.

Furthermore, such heavy duty gas turbines known in the prior art using a cooling system with a water-based cooling air cooler are only adapted for a combined cycle operation modus, and a simple cycle operation modus with such turbines can only be achieved by a reconstruction or a change of the construction of the gas turbine in particular in relation to the cooling system. In other words, such heavy duty gas turbines with a water/steam-cooled cooling air cooler as a cooling system are not flexible with regard to the operation modus and cooling performance and are usually only adapted for an operation in a combined cycle operation modus.

EP 0 773 349 discloses a gas turbine and method according to the pre-characterizing part of claims 1 and 8.

### Summary of the disclosure

In view of the above-described disadvantages of prior art gas turbines, it is an object of the present disclosure to provide a heavy duty gas turbine as well as a method for operating such a gas turbine having a flexible cooling system enabling different operation modes during the phase of construction as well as the phase of commercial use. It is a further object of the present disclosure to provide a gas turbine and a method for operating a gas turbine, which do not require a rebuild of a cooling system or of a turbine for an application in a combined cycle operation modus as well as a simple cycle operation modus.

This object is achieved by means of a gas turbine with the features of claim 1 as well as by a method for operating a gas turbine according to claim 8. Preferable embodiments and further developments of the gas turbine and the method are given in the dependent claims.

The gas turbine according to the present disclosure is provided with a cooling system for cooling inlet air taken from a compressor of the gas turbine, which is to be introduced into the turbine and/or combustor for the purpose of cooling down the operational devices of the gas turbine, which is in particular adapted for a flexible operation in a combined cycle application as well as a simple cycle application of a gas turbine power plant. The cooling system of the gas turbine according to the present disclosure comprises at least a water/steam-cooled cooling air cooler for use in a normal combined cycle application modus, and it is characterized in that the gas turbine is provided with at least one second cooling air system arranged in a bypass which is operable instead of or parallel to the water/steam-cooled cooling air cooler for use in particular in a simple cycle application operation of the gas turbine. Due to this at least one second cooling air system of the cooling system, the gas turbine according to the disclosure is not restricted to only a use with a cooling air cooler which requires water or steam from a water/steam cycle. In case that only the gas turbine is finalized in the phase of construction and the water/steam cycle is not yet built up, the gas turbine may nevertheless be operated, for example for the purpose of testing operations. In such a case, the gas turbine has simply to be switched to the at least one second cooling air system of the cooling system of the gas turbine. This second cooling air system or the combination of the second cooling air systems is arranged in a bypass with regard to the normal water-based cooling device, so that the water/steam-cooled cooling air cooler is not necessarily required for an operation of the turbine. The water/steam-cooled cooling air cooler of the cooling system is, for example, completely shut off if the gas turbine is to operate in a simple cycle operation modus. In any case, the maximum turbine inlet temperatures may be maintained, so that a change between different operation modes (simple cycle versus combined cycle) is possible without any risks of deterioration or shortening of the lifetime of the elements of the gas turbine. Also in case that a maintenance of a water/steam cycle of the power plant is necessary, the gas turbine can still be operated further in view of the at least one second cooling air system, which can be switched on and off in order to replace the normal water/steam-cooled cooling air cooler or to be operated in parallel to this air cooler. With this gas turbine according to the present disclosure, different operation modes are possible in a maximum flexible way: a combined cycle mode, a simple cycle mode both with the cooling air coolers switched off, switched on or, if more than one additional cooling air cooler is given, partly switched off. The at least one second cooling air system of the cooling system of the gas turbine according to the disclosure may be a cooling air cooler of any kind and which is commonly known to a person skilled in the art. For example, the at least one second cooling air system may comprise a quench cooler or an air-to-air cooler. The switching between the different cooling air cooling systems may be achieved with conventional switching devices for turbines, such as control valves and control equipment known in the area of such gas turbines and gas turbine power plants. Typically the water/steam-cooled cooling air cooler allows the use of the heat extracted in the water/steam-cooled cooling air cooler in the water steam cycle thereby increasing power and efficiency of the combined cycle. Therefore typically the water/steam-cooled cooling air cooler is used for combined cycle operation called "normal combined cycle operation" in this context. Not normal but conceivable is a combined cycle operation using the additional cooling air cooler.

According to an advantageous aspect of the present disclosure, the gas turbine is provided with means for completely shutting off the water/steam-cooled cooling air cooler of the cooling system when the at least one second cooling air system is in operation. The gas turbine may therefore be operated separately from the water/steam cycle of the power plant. An operation of the gas turbine in the phase of construction is therefore enabled. This makes it also possible to conduct maintenance of the water/steam-cooled cooling air cooler or the water/steam cycle, independently of the further operation of the gas turbine. The means for completely shutting off the water/steam-cooled cooling air cooler are, for example, a shut-off valve connected to a control device or, alternatively, a three-way valve switching between the main cooling air line and the bypass cooling air line.

According to a further advantageous aspect of the present disclosure, the gas turbine is adapted to being operable without a water/steam cycle being built up. The gas turbine according to the disclosure is thereby specifically adapted also for use in a simple cycle operation modus of a power plant, also in case that it is initially constructed for a combined cycle application.

According to a further advantageous aspect of the present disclosure, a control device for automatically switching between said water/steam-cooled cooling air cooler and said at least one second cooling air system is provided, in which data concerning the maximum turbine inlet temperature, the operation mode settings, the compressor inlet guide vane(s), a lifetime counter for different operation modes, etc. is stored. Based on a combination of this data or a section of one of these settings, the switching between the primary cooling system and the at least one second additional cooling air system may be adapted according to different requirements and operation applications. By means of this, also a very simple power modulation in either a simple cycle operation modus or a combined cycle operation modus of the gas turbine is possible. The gas turbine switches automatically between the respective required cooling means for cooling the inlet air to the required maximum turbine inlet temperature, for example, based on pre-stored formulas concerning the maximum turbine inlet temperature for any of the operation modes and construction details of the gas turbine. By means of this, also a power modulation depending on the form of cooling system being actually in use is possible.

According to a further advantageous embodiment of the present disclosure, the at least one second cooling air system is realized in form of either a quench cooler, an air-to-air cooler, a once-through cooler with a dump condenser connected to a heat recovery system generator and a gas turbine exhaust system, a combination therefrom, or the like. These second cooling air systems are installed in a bypass of the gas turbine and may be switched on and off depending on the specific requirements. If the water from a water/steam cycle is not yet present, the gas turbine may nevertheless be operated, for example, with the air-to-air cooler of the second cooling air system being switched on and the water/steam-cooled cooling air cooler being switched off.

According to a further advantageous embodiment of the present disclosure, a flow division with, for example, valves and blind flanges for an installation of said water/steam-cooled cooling air cooler is provided. By means of this, a simple installation of the water/steam-cooled cooling air cooler is later possible without any complicated changes in the construction or without a time-consuming rebuild of the gas turbine being necessary. The water/steam-cooled cooling air cooler may in particular be an integrated type of air cooler of the gas turbine.

According to a further advantageous embodiment of the gas turbine according to the present disclosure, a switching device for switching said cooling system from said water/steam-cooled cooling air cooler to said at least one second cooling air system and vice versa depending on the construction phase of the gas turbine and/or the operation modus is provided. Hereby, a simple change of the respective form of the cooling air cooling system is enabled. The switching device may be switched with appropriate control means depending on the respective operation modus (simple cycle modus or combined cycle modus) or depending on the stage of the construction of a power plant.

The present disclosure relates furthermore to a method for operating a gas turbine for use in particular in a gas steam turbine plant according to the steps as defined in claim 8, whereby a cooling air cooling system for cooling inlet air taken from compressor extractions or compressor discharge and introduced to the turbine(s) and/or combustor(s) of the gas turbine is provided, which is adapted for a flexible operation in a combined cycle application as well as a simple cycle application, wherein the cooling system comprises at least a water/steam-cooled cooling air cooler for use in a normal combined cycle application, and wherein the method is characterized by the steps of:
a.) switching the operation of the gas turbine to at least one second cooling air system arranged in a bypass, which is operable instead of or parallel to the water/steam-cooled cooling air cooler in case of a requirement of a simple cycle application operation of the gas turbine or in case of a construction phase, in which a water/steam cycle is not yet completed or installed; and
b.) automatically switching in case of step a.) the operation modus of the gas turbine to another gas turbine operation concept adapted to said at least one second cooling air system and/or settings concerning a simple cycle operation modus.

With this method for operating a gas turbine according to the present disclosure, a flexible and fast change of respective cooling air cooling systems is possible. Depending on operation situations such as the phase of construction or depending on the actual requirements of the power plant, the gas turbine may be easily switched from a first cooling system based on water or steam from a water/steam cycle to at least one second cooling air cooling system, which, for example, is based on an air-to-air cooler. The switching from one cooling system to another cooling system is in particular achieved automatically by means of a switching device and a control device for the operation of the gas turbine. The gas turbine may therefore be operated also in situations, in which conventional so-called heavy duty gas turbines cannot be operated due to their construction, which is specifically adapted to a combined cycle use. Furthermore, the maximum lifetime of the gas turbine is longer than that of prior art gas turbines, because the maximum air inlet temperatures of the turbine are always observed in any phase of operation of the gas turbine.

According to an advantageous aspect of the method according to the disclosure, the gas turbine is operated at different pre-stored settings regarding in particular the turbine inlet temperature(s), the compressor inlet guide vane(s), the lifetime counter, etc. in a simple cycle operation modus as compared to a combined cycle operation modus. By changing from one operation modus to the other and by changing the cooling inlet air cooling system, the pre-stored settings of the gas turbine are respectively adapted. The method does therefore not require any additional manipulation of an operator as regards the control system of the power plant or the gas turbine.

According to a further advantageous aspect of the method of the present disclosure, the bypass with the at least one second cooling air system is completely opened, and the water/steam-cooled cooling air cooler is completely shut off in step a.). The operation of the gas turbine is therefore completely independent of the water/steam cycle and may be operated even before the water/steam cycle is built up or in case the water/steam cycle does not provide sufficient cold cooling fluids. This enables also a simple maintenance of the different systems of the gas turbine in the power plant.

### Embodiments of the disclosure

A preferred embodiment of the gas turbine according to the present disclosure and the method of operating such a gas turbine will be described in more detail in the following, with reference to the attached drawing.

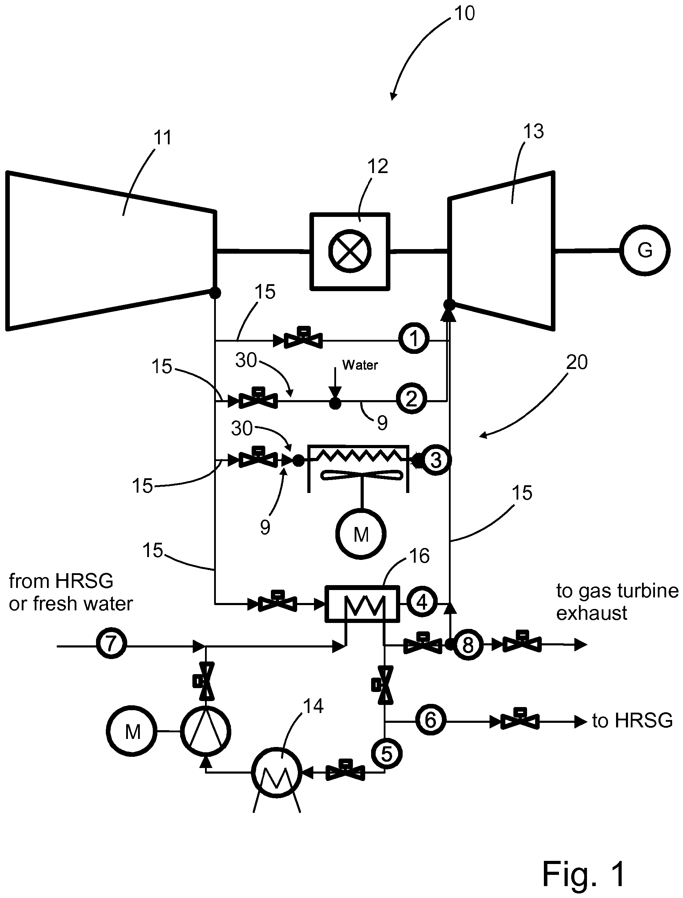

The single schematical representation of Fig. 1 of the attached drawings shows an exemplary embodiment of a gas turbine according to the present disclosure. The gas turbine 10 is essentially comprised of a compressor 11, a combustion chamber 12 and a turbine 13. Furthermore, a specific cooling air cooling system 20 is provided. The inlet air of the cooling system 20, which is used for cooling in particular components of the turbine 13, is taken from a discharge of the compressor 11 and flows through several cooling air lines to respective thermal sensitive components of the turbine 13, which are to be cooled. The cooling of the necessary cooling air takes place by means of a cooling system 20, which comprises first a water/steam-cooled cooling cooler shown at reference number 4 in Fig. 1. From an input line 7, fresh water or water from a heat recovery steam generator (HRSG) is supplied to a once-through cooler 16, in which the inlet air of the turbine 13 is cooled down to the required and pre-set maximum turbine inlet temperature (TIT) of the gas turbine 13. Furthermore, there is provided a dump condenser 14 with a return line to the HRSG. On the output side of the once-through cooler 16, the produced steam flows into the gas turbine exhaust. At 6, the output of the once-through cooler 16 is guided back to the heat recovery steam generator (HRSG). In addition to this conventional form of a water-supplied air cooling cooler, the cooling system 20 according to this embodiment of the present disclosure is provided with alternative cooling systems for cooling down the inlet air to the turbine 13: in case of the embodiment shown in Fig. 1 of the drawings, there is provided a quench cooler 2 in a bypass line 9 as a possible second cooling air system in addition to the conventional water/steam-cooled cooling air cooler. Furthermore, in a separate bypass line 9, an air-to-air cooler 3 is schematically shown in Fig. 1. And in the upper part of Fig. 1, a cooling air line 15 is shown, through which the cooling air flows in an uncooled manner if necessary for the operation of the gas turbine 10.

The gas turbine 10 of the present disclosure is furthermore provided with a control device and a switching means (not shown in Fig. 1), by means of which the cooling system 20 may be switched from one type of cooling device to another type of cooling device, in particular in order to switch the cooling system 20 to one of the alternative second additional cooling air cooling systems 30 in the bypass lines 9. The cooling system 20 of this gas turbine 10 is therefore able to change in a flexible manner the type of cooling air cooling system, so that the gas turbine 10 may be operated in both a combined cycle application and a simple cycle application of a gas turbine power plant. If, for example, the water/steam cycle is not yet built up or if the maintenance of the water/steam cycle becomes necessary, the cooling system 20 can be easily switched to one of the other additional cooling systems 30, namely either the quench cooler 2 or the air-to-air cooler 3, or even a combination thereof. In this example of realization of Fig. 1, it is furthermore possible that only a part of the inlet air can be cooled by means of the cooling system 20 when the bypass line 1 for uncooled air is opened to a certain extent. The range of control of the air inlet temperature in the gas turbine 13 is therefore increased by the disclosure, and the cooling system 20 is specifically adapted for a very flexible operation in several different operation modes as well as in different forms of gas turbine power plants.

When changing from the conventional water-supplied cooling air cooler 4 in form of the once-through cooler to the alternative at least one second cooling air systems 30, the operation method of the gas turbine 10 is according to this example of realization also automatically modified, for example, to either an operation concept for a simple cycle operation modus or to an operation concept of a combined cycle operation modus. In all cases, the power modulation of the gas turbine 10 is realized either with a constant compressor inlet mass flow and by modifying the turbine inlet temperature for a high gas turbine part load efficiency (simple cycle) or by means of a variation of the compressor inlet mass flow at a constant exhaust temperature of the inlet air for a high part load efficiency. The method and the gas turbine 10 according to the present disclosure are therefore also specifically adapted for an efficient part load or an efficient full load operation modus.

The possibility of switching off the water-supplied conventional cooling air cooler and of alternatively using one of the at least one second cooling air systems 30 makes it possible to operate the gas turbine 10 also before the steam/water cycle has been built up. Furthermore, this is advantageous in certain operation situations of gas turbine power plants, in which the cooling air cooling system for the gas turbine has to be changed for various reasons. Also for maintenance purposes, the switching from one type of cooling system to another type of cooling system of the cooling air cooling system 20 can provide advantageous effects. The gas turbine 10 does not have to be rebuilt in case that it is to be used for a simple cycle operation modus in the future, even though it was initially conceived specifically for a combined cycle operation modus. A simple switching between the different types of cooling air coolers makes it possible to adapt the gas turbine 10 in a very flexible manner to respective requirements and situations in the phase of construction as well as in the phase of commercial use of the gas turbine in a gas and steam turbine plant, for example.

According to a further aspect of the present disclosure, the control device for operating the gas turbine according to the method of operation of the gas turbine of the present disclosure comprises data with respect to initial settings concerning first different operation modes, such as a simple cycle mode and a combined cycle mode, and second data with regard to pre-settings of each of these operation modes for the specific gas turbine, such as maximum turbine inlet temperatures or formulas for maximum turbine inlet temperatures and the required mass flow, which can be modified through a variation of the compressor inlet guide vane(s). The gas turbine 10 comprises furthermore a flow division with valves and blind flanges for a future installation of the conventional water/steam-cooled cooling air cooler, so that the gas turbine is immediately ready for both types of operation modes (combined cycle as well as simple cycle).

According to a further aspect of the present disclosure, a bypass pipe for bypassing the cooling air cooler system can be installed. This can be used during an outage or during maintenance of the water/steam cycle or of the cooling air cooler working with water where no steam or water for cooling is available, for example for a quench cooler. The material of the bypass pipes must be able to withstand the temperature of the uncooled cooling air, in contrast to the pipe material after the cooler, which would normally be built only to withstand the cooled cooling air temperature. Such a bypass pipe system can be used for all turbines of the same arrangement in a combined cycle power plant with two or more turbines, avoiding the need for separate systems for every single turbine. Flanges can be provided to make bypass pipe installation easier.

According to a further aspect of the present disclosure, the gas turbine can be operated with lower turbine inlet hotgas temperatures, because of the higher cooling air temperature. The corresponding setpoint within the control system can be adjusted accordingly, either keeping the temperatures of the cooled parts unchanged or allowing a defined increase but increasing the lifetime counter during such operation. In this way, it is possible to operate the gas turbine without the water steam cycle and with no additional heat sink for recooling of the cooling air.

The present disclosure is not limited to the above-described exemplary form of realization, and different types and numbers of types of cooling systems can be used for the achievement of the object of the present disclosure, as long as the cooling system 20 comprises at least one first (conventional) cooling air cooler and at least one second additional cooling air system arranged in a bypass in order to be alternatively switched on or off to the first conventional cooling air cooler. For a skilled person, the possibilities and forms of realization of such alternative types of cooling air coolers are commonly known. The different types of cooling systems can also be only in part combined in case that the conventional water/steam-cooled cooling air cooler is only shut off in part and not completely. Furthermore, the direct bypass line 9 can be used for a flow of non-cooled cooling air to the turbine 13 of the gas turbine 10, depending on the level of the temperature of the cooling air coming from the extraction or discharge of the compressor 1. A large number of flexible operation modes and control possibilities is therefore given with this disclosure through the above-described forms of gas turbines and the method for operating a gas turbine according to the present disclosure.

## Claims

1. Gas turbine (10) for a gas and steam turbine plant comprising a cooling system (20) for cooling inlet air taken from compressor extractions or compressor discharge and introduced to the turbine(s) and/or combustor(s) of the gas turbine (10) which is adapted for flexible operation in a combined cycle application as well as a simple cycle application, wherein the cooling system (20) comprises at least a water/steam cooled cooler for cooling the inlet air taken from the compressor for use in a normal combined cycle application, **characterized in that** the gas turbine (10) is provided with at least one second cooling air system (30) arranged in a bypass (9) of the air taken from the compressor, wherein the at least one second cooling air system (30) is operable instead of or parallel to the water/steam cooled cooling air cooler for use in particular in a simple cycle application operation of the gas turbine (10).

2. Gas turbine (10) according to claim 1, **characterized in that** means are provided for completely shutting off the water/steam cooled cooling air cooler of the cooling system (20) when said second cooling air system (30) is operated.

3. Gas turbine (10) according to claim 1 or 2, **characterized in that** the gas turbine (10) is adapted to being operable without a water/steam cycle being built up.

4. Gas turbine (10) according to any one of the preceding claims, **characterized in that** a control device for automatically switching between said water/steam cooled cooling air cooler and said second cooling air system (30) is provided, in which data concerning the turbine inlet temperature, operation mode settings, compressor inlet guide vane(s), lifetime counter for different operation modes is stored.

5. Gas turbine (10) according to any one of the preceding claims, **characterized in that** said second cooling air system (30) is realized in form of either a quench cooler, an air to air cooler, a once through cooler with a dump condenser connected to a heat recovery steam generator and a gas turbine exhaust system, or a combination therefrom.

6. Gas turbine (10) according to any one of the preceding claims, **characterized in that** a flow division with valves and blind flanges for an installation of said water/steam cooled cooling air cooler is provided.

7. Gas turbine (10) according to any one of the preceding claims, **characterized in** a switching device is provided for switching said cooling system (20) from said water/steam cooled cooling air cooler to said second cooling air system (30) and vice versa depending on the construction phase of the gas turbine (10) and/or the operation modus.

8. Method for operating a gas turbine (10) for a gas and steam turbine plant comprising a cooling system (20) for cooling inlet air taken from compressor extractions or compressor discharge and introduced to the turbine(s) and/or combustor(s) of the gas turbine (10) which is adapted for flexible operation in a combined cycle application as well as a simple cycle application, wherein the cooling system (20) comprises at least a water/steam cooled cooler for cooling the inlet air taken from the compressor for use in a normal combined cycle application, **characterized by** the steps of:
a.) switching the operation of the gas turbine (10) to at least one second cooling air system (30) arranged in a bypass (9) of the air taken from the compressor, wherein the at least one second cooling air system (30) is operable instead of or parallel to the water/steam cooled cooling air cooler in case of the requirement of a simple cycle application operation of the gas turbine (10) or in case of a construction phase in which a water/steam cycle is not yet completed or installed; and
b.) automatically switching in case of step a.) the operation modus of the gas turbine (10) to another gas turbine operation concept adapted to said at least one second cooling air system (30) and/or settings concerning a simple cycle operation modus.

9. Method according to claim 8, **characterized by** operating the gas turbine (10) at different settings regarding in particular the turbine inlet temperature(s), the compressor inlet guide vane(s), the lifetime counter in a simple cycle operation modus as compared to a combined cycle operation modus.

10. Method according to claim 8 or 9, **characterized by** opening said bypass (9) and completely shutting off said water/steam cooled cooling air cooler in step a.).

## Patentansprüche

1. Gasturbine (10) für eine Gas- und Dampfturbinenanlage, umfassend ein Kühlsystem (20) zum Kühlen von Einlassluft, die aus Verdichteranzapfungen oder einem Verdichterauslass entnommen wird und in die Turbine(n) und/oder Brennkammer(n) der Gasturbine (10) eingeleitet wird, die für einen flexiblen Betrieb in einer Kombinationszyklus-Anwendung sowie in einer Einfachzyklus-Anwendung ausgelegt ist, wobei das Kühlsystem (20) wenigstens einen wasser-/dampfgekühlten Kühler zum Kühlen der dem Verdichter entnommenen Einlassluft für die Verwendung in einer normalen Kombinationszyklus-Anwendung umfasst, **dadurch gekennzeichnet, dass** die Gasturbine (10) mit wenigstens einem zweiten Kühlluftsystem (30) versehen ist, das in einer Umführung (9) der dem Verdichter entnommenen Luft angeordnet ist, wobei das wenigstens eine zweite Kühlluftsystem (30) anstelle des oder parallel zu dem wasser-/dampfgekühlten Kühlluftkühler betreibbar ist, für die Verwendung insbesondere bei Betrieb der Gasturbine (10) in einer Einfachzyklus-Anwendung.

2. Gasturbine (10) nach Anspruch 1, **dadurch gekennzeichnet, dass** Mittel zum vollständigen Abschalten des wasser-/dampfgekühlten Kühlluftkühlers des Kühlsystems (20) vorgesehen sind, wenn das zweite Kühlluftsystem (30) betrieben wird.

3. Gasturbine (10) nach Anspruch 1 oder 2, **dadurch gekennzeichnet, dass** die Gasturbine (10) dafür ausgelegt ist, betreibbar zu sein, ohne dass ein Wasser-/Dampf-Zyklus aufgebaut wird.

4. Gasturbine (10) nach einem der vorangehenden Ansprüche, **dadurch gekennzeichnet, dass** eine Steuervorrichtung zum automatischen Umschalten zwischen dem wasser-/dampfgekühlten Kühlluftkühler und dem zweiten Kühlluftsystem (30) vorgesehen ist, in der Daten über die Turbineneinlasstemperatur, Betriebsart-Einstellungen, Verdichtereinlassleitschaufel(n) und Lebensdauerzähler für unterschiedliche Betriebsarten gespeichert sind.

5. Gasturbine (10) nach einem der vorangehenden Ansprüche, **dadurch gekennzeichnet, dass** das zweite Kühlluftsystem (30) in Form eines Einspritzkühlers, eines Luft-Luft-Kühlers, eines Einmal-Durchlaufkühlers mit einem Deponiekondensator, der mit einem Abhitzedampferzeuger und einem Gasturbinen-Abgassystem oder einer Kombination daraus verbunden ist, ausgeführt ist.

6. Gasturbine (10) nach einem der vorangehenden Ansprüche, **dadurch gekennzeichnet, dass** eine Strömungsaufteilung mit Ventilen und Anschlussflanschen für eine Installation des wasser-/dampfgekühlten Kühlluftkühlers vorgesehen ist.

7. Gasturbine (10) nach einem der vorangehenden Ansprüche, **dadurch gekennzeichnet, dass** eine Schaltvorrichtung vorgesehen ist, um in Abhängigkeit von der Bauphase der Gasturbine (10) und/oder der Betriebsart das Kühlsystem (20) von dem wasser-/dampfgekühlten Kühlluftkühler auf das zweite Kühlluftsystem (30) und umgekehrt umzuschalten.

8. Verfahren zum Betreiben einer Gasturbine (10) für eine Gas- und Dampfturbinenanlage, die ein Kühlsystem (20) umfasst zum Kühlen von Einlassluft, die aus Verdichteranzapfungen oder einem Verdichterauslass entnommen wird und in die Turbine(n) und/oder Brennkammer(n) der Gasturbine (10) eingeleitet wird, die für einen flexiblen Betrieb in einer Kombinationszyklus-Anwendung sowie in einer Einfachzyklus-Anwendung ausgelegt ist, wobei das Kühlsystem (20) wenigstens einen wasser-/dampfgekühlten Kühler zum Kühlen der dem Verdichter entnommenen Einlassluft für die Verwendung in einer normalen Kombinationszyklus-Anwendung umfasst, **gekennzeichnet durch** die Schritte:
a.) Umschalten des Betriebs der Gasturbine (10) auf wenigstens ein zweites Kühlluftsystem (30), das in einer Umführung (9) der dem Verdichter entnommenen Luft angeordnet ist, wobei das wenigstens eine zweite Kühlluftsystem (30) anstelle von oder parallel zu dem wasser-/dampfgekühlten Kühlluftkühler betreibbar ist, falls ein Einfachzyklus-Betrieb der Gasturbine (10) erforderlich ist oder im Fall einer Bauphase, in der ein Wasser-/Dampf-Kreislauf noch nicht abgeschlossen oder installiert ist; und
b.) automatisches Umschalten der Betriebsart der Gasturbine (10) im Fall von Schritt a.) auf ein weiteres Gasturbinenbetriebskonzept, das auf das wenigstens eine zweite Kühlluftsystem (30) und/oder Einstellungen bezüglich einer Einfachzyklus-Betriebsart ausgelegt ist.

9. Verfahren nach Anspruch 8, **gekennzeichnet durch** ein Betreiben der Gasturbine (10) mit unterschiedlichen Einstellungen in Bezug auf insbesondere die Turbineneinlasstemperatur(en), die Verdichtereinlassleitschaufel(n), den Lebensdauerzähler in einer Einfachzyklus-Betriebsart im Vergleich zu einer Kombinationszyklus-Betriebsart.

10. Verfahren nach Anspruch 8 oder 9, **gekennzeichnet durch** ein Öffnen der Umführung (9) und ein vollständiges Abschalten des wasser-/dampfgekühlten Kühlluftkühlers in Schritt a.).

## Revendications

1. Turbine à gaz (10) pour une installation de turbines à gaz et à vapeur comprenant un système de refroidissement (20) pour refroidir l'air d'entrée prélevé à partir des extractions de compresseur ou de la décharge de compresseur et introduit dans la (les) turbine(s) et/ou la (les) chambre(s) de combustion de la turbine à gaz (10) qui est adaptée pour le fonctionnement flexible dans une application de cycle combiné ainsi qu'une application de cycle simple, dans laquelle le système de refroidissement (20) comprend au moins un refroidisseur refroidi par eau/vapeur pour refroidir l'air d'entrée prélevé par le compresseur, destiné à être utilisé dans une application de cycle combiné normale, **caractérisée en ce que** la turbine à gaz (10) est prévue avec au moins un second système d'air de refroidissement (30) agencé dans une dérivation (9) de l'air prélevé par le compresseur, dans laquelle le au moins un second système d'air de refroidissement (30) peut fonctionner au lieu de ou en parallèle du refroidisseur d'air refroidi par eau/vapeur, destiné à être utilisé en particulier dans une opération d'application de cycle simple de la turbine à gaz (10).

2. Turbine à gaz (10) selon la revendication 1, **caractérisée en ce que** l'on prévoit des moyens pour arrêter complètement le refroidisseur d'air refroidi par eau/vapeur du système de refroidissement (20) lorsque ledit second système d'air de refroidissement (30) est actionné.

3. Turbine à gaz (10) selon la revendication 1 ou 2, **caractérisée en ce que** la turbine à gaz (10) est adaptée pour pouvoir être actionnée sans qu'un cycle d'eau/vapeur ne soit créé.

4. Turbine à gaz (10) selon l'une quelconque des revendications précédentes, **caractérisée en ce que** l'on prévoit un dispositif de commande pour commuter automatiquement entre ledit refroidisseur d'air de refroidissement refroidi par eau/vapeur et ledit second système d'air de refroidissement (30), dans lequel les données concernant la température d'entrée de turbine, les réglages de mode de fonctionnement, la (les) pale(s) de guidage d'entrée de compresseur, le compteur de durée de vie pour différents modes de fonctionnement, sont stockées.

5. Turbine à gaz (10) selon l'une quelconque des revendications précédentes, **caractérisée en ce que** ledit second système d'air de refroidissement (30) est réalisé sous la forme de l'un ou l'autre parmi un refroidisseur par trempe, un refroidisseur air - air, un refroidisseur à passage unique avec un refroidisseur à décharge raccordé à un générateur de vapeur à récupération de chaleur et un système d'échappement de turbine à gaz ou leur combinaison.

6. Turbine à gaz (10) selon l'une quelconque des revendications précédentes, **caractérisée en ce que** l'on prévoit une division d'écoulement avec des valves et des brides borgnes pour une installation dudit refroidisseur d'air de refroidissement refroidi par eau/vapeur.

7. Turbine à gaz (10) selon l'une quelconque des revendications précédentes, **caractérisée en ce que** l'on prévoit un dispositif de commutation pour commuter ledit système de refroidissement (20) dudit refroidisseur d'air de refroidissement refroidi par eau/vapeur audit second système d'air de refroidissement (30) et vice versa en fonction de la phase de construction de la turbine à gaz (10) et/ou du mode opératoire.

8. Procédé pour faire fonctionner une turbine à gaz (10) pour une installation de turbines à gaz et à vapeur comprenant un système de refroidissement (20) pour refroidir l'air d'entrée prélevé par les extractions de compresseur ou la décharge de compresseur et introduit dans la (les) turbine(s) et/ou la (les) chambre(s) de combustion de la turbine à gaz (10) qui est adaptée pour le fonctionnement flexible dans une application de cycle combiné ainsi qu'une application de cycle simple, dans lequel le système de refroidissement (20) comprend au moins un refroidisseur refroidi par eau/vapeur pour refroidir l'air d'entrée prélevé par le compresseur pour être utilisé dans une application de cycle combiné normale, **caractérisé par** les étapes consistant à :
a) commuter le fonctionnement de la turbine à gaz (10) sur au moins un second système d'air de refroidissement (30) agencé dans une dérivation (9) de l'air prélevé par le compresseur, dans lequel le au moins un second système d'air de refroidissement (30) peut fonctionner au lieu de ou en parallèle au refroidisseur d'air de refroidissement refroidi par eau/vapeur dans le cas d'un besoin d'une opération d'application de cycle simple de la turbine à gaz (10) ou dans le cas d'une phase de construction dans laquelle le cycle eau/vapeur n'est pas encore terminé ou installé ; et
b) commuter automatiquement dans le cas de l'étape a) le mode opératoire de la turbine à gaz (10) sur un autre concept de fonctionnement de turbine à gaz adapté audit au moins un second système d'air de refroidissement (30) et/ou réglages concernant un mode opératoire à cycle simple.

9. Procédé selon la revendication 8, **caractérisé par** l'étape consistant à actionner la turbine à gaz (10) à différents réglages concernant en particulier la (les) température(s) d'entrée de turbine, la (les) pale(s) de guidage d'entrée de compresseur, le compteur de durée de vie dans un mode opératoire à cycle simple par rapport à un mode opératoire à cycle combiné.

10. Procédé selon la revendication 8 ou 9, **caractérisé par** les étapes consistant à ouvrir ladite dérivation (9) et fermer complètement ledit refroidisseur d'air de refroidissement refroidi par eau/vapeur à l'étape a).
